# EUROPEAN PATENT APPLICATION

(11) **EP 2 111 773 A1**
(43) Date of publication of application: **28.10.2009**
(21) Application number: 08720343.6
(22) Date of filing: 06.03.2008
(51) Int. Cl.: A47B 81/06, A47B 96/20, H04N 5/64

(54) **DEVICE MOUNTING BASE**

(30) Priority: 08.03.2007 JP 2007058039
(71) Applicant: Panasonic Corporation, Kadoma-shi Osaka 571-8501 (JP)
(72) Inventor: HORI, Masatoshi, Osaka-shi, Osaka 540-6207 (JP)
(74) Representative: Kügele, Bernhard
(86) International application number: PCT/JP2008/000457
(87) International publication number: WO 2008/123013

(57) **Abstract**

A device mounting base comprises a main mounting unit (6) for mounting an apparatus, and a front panel (9) made of a resin material and installed on the main mounting unit (6) in a position in front of the main mounting unit (6) with a plurality of movable devices, wherein the main mounting unit (6) and the front panel (9) are engaged with a movement restraining device for restraining the front panel (9) from shifting in front of the main mounting unit (6). The movable devices absorb deformation of front panel (9) to prevent it from warping and distorting, and the movement restraining device prevents front panel (9) from shifting by the deformation even when front panel (9) deforms due to heating and cooling, or moisture absorption and dehydration.

## Description

### TECHNICAL FIELD

The present invention relates to a device mounting base for mounting an apparatus such as a television.

### BACKGROUND ART

Apparatuses such as television sets are often mounted for use on furniture of types capable of carrying apparatuses and mounting stands made exclusively for mounting the apparatuses.

With the recent trend of upsizing television sets, device mounting bases are also increased in their sizes. This tends to place an importance on design of the device mounting bases as well as design of the apparatuses. It is therefore required for the device mounting bases to be designed so that they harmonize aesthetically with apparatuses placed thereon along with rooms where they are used as pieces of the furniture.

It is also required, on the other hand, that the device mounting bases are designed to have sufficient robustness to withstand the heavy loads resulting from upsizing of the apparatuses mounted thereon.

One of structures proposed as the means to satisfy these two requirements is to provide a door made of a plate of glass or acrylic resin on the front side of a main mounting unit of the device mounting base (refer to patent reference 1, for example).

There is also another structure proposed to provide a single piece of acrylic plate on the front side of a device mounting base designed to store an apparatus (refer to patent reference 2, for example).

Use of a plastic plate such as acrylic plate as a front panel provides a significant advantage in the light of aesthetic design since it can make a glossy surface possible, which helps achieve the mounting stand in harmonization with the apparatus and the room interior. It also has another advantage of allowing the device mounting base to be designed with the emphasis placed on the functionality such as robustness, lightweight and ease of assembling of a main mounting unit since the plastic plate can be placed only when necessary to cover the front side of the main mounting unit of the device mounting base.

The plastic plate such as acrylic plate has a disadvantage, however, that it is apt to deform due to heating and cooling or moisture absorption and dehydration, and becomes warped or distorted depending on conditions of the installation. If the plastic plate is warped or distorted, it leads to such failures as disengagement of the plastic plate from the main mounting unit, deformation of the plastic plate and spoiling the appearance due to distortion of a surrounding scene reflected on the plastic plate.

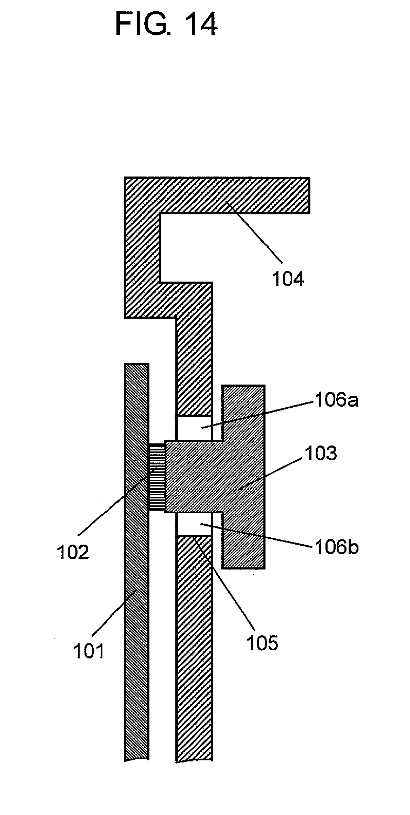

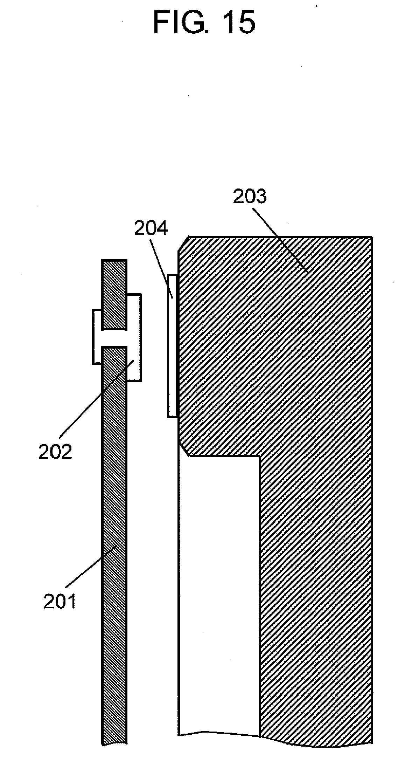

For this reason, there is proposed a technique to deal with deformation of the acrylic plate attributable to heating and cooling as well as moisture absorption and dehydration (refer to patent reference 3, for example). Referring to Fig. 14 and Fig. 15, description is provided of a brief outline of such techniques. Both Fig. 14 and Fig. 15 show installation methods, in which a front panel made of an acrylic plate is provided in front of a television for protection of the screen.

As shown in Fig. 14, front panel 101 has movable member 103 bonded to an upper side portion thereof with double-sided adhesive tape 102. Movable member 103 is disposed inside mounting hole 105 in cabinet 104 fixed to a front face of a television (not shown) in a vertically movable manner within spaces 106a and 106b.

Movable members 103 of this structure are also disposed at both right and left side portions and a lower side portion of front panel 101 so that these movable members 103 shift freely to absorb deformation of front panel 101 and to prevent it from warping and distorting.

Another structure proposed as shown in Fig. 15 is front panel 201 provided with coupling component 202 having a magnet and attached to an edge portion thereof, wherein coupling component 202 comes to couple to metal plate 204 mounted to a front face of television 203 (refer to patent reference 4, for example).

Coupling component 202 of this structure is also disposed at each of the four corners of front panel 201 and also at the mid point of these corners if necessary so that coupling components 202 can slide while being held on front panel 201 to absorb deformation of front panel 201 to prevent it from warping and distorting.

The conventional structures discussed above exhibit the following problems, however, when employed in the device mounting base.

That is, the structures disclosed in Fig. 14 and Fig. 15, when used separately or in combination, are effective to prevent the front panel made of a plastic plate such as acrylic panel from warping and distorting because of the feature of absorbing deformation of the front panel attributable to heating and cooling as well as moisture absorption and dehydration, in addition to the advantage of covering a desired portion of the main mounting unit with a glossy surface of the front panel disposed in front of the device mounting base. However, the front panel tends to shift in position in front of the main mounting unit because of the structure designed to absorb the deformation of the front panel.

It therefore leaves the front panel with a high probability of tilting and coming into misalignment in the position with respect to the apparatus installed on it, thereby impairing the advantageous features of the front panel intended to provide the device mounting base with improvement of the function and the aesthetic design.
Patent Reference 1: Japanese Patent Unexamined Publication, No. 2001-73628
Patent Reference 2: Japanese Patent Unexamined Publication, No. 1985-148976
Patent Reference 3: Japanese Patent Unexamined Publication, No. 2003-5276
Patent Reference 4: Japanese Patent Unexamined Publication, No. 2007-17498

### SUMMARY OF THE INVENTION

A device mounting base of the present invention comprises a main mounting unit for mounting an apparatus, and a front panel installed on the main mounting unit in a position in front of the main mounting unit with a plurality of movable devices, wherein the main mounting unit and the front panel are engaged with a movement restraining device provided at generally the center along a lateral direction in a manner to restrain the front panel from shifting in front of the main mounting unit.

The plurality of movable devices are used to install the front panel made of a plastic resin on the main mounting unit for carrying the apparatus so as to absorb deformation of the front panel and to avoid it from warping and distorting, and the movement restraining device is used to engage the front panel to the main mounting unit so as to restrain shifting of the front panel in front of the main mounting unit due to the deformation and to prevent the front panel from tilting and becoming misaligned with respect to the apparatus placed on the mounting stand. The invention can hence provide the device mounting base of excellent features with respect to the functionality and aesthetic design.

### BRIEF DESCRIPTION OF DRAWINGS

Fig. 1A is a front view showing a device mounting base according to a first exemplary embodiment of the present invention with an apparatus mounted thereon;
Fig. 1B is an exploded perspective view of a part of the same device mounting base;
Fig. 2 is an exploded perspective view showing a movable device of the same device mounting base;
Fig. 3 is an exploded perspective view showing a movement restraining device of the same device mounting base;
Fig. 4 is an exploded perspective view showing a movable device of a device mounting base according to a second exemplary embodiment of the present invention;
Fig. 5 is an exploded perspective view showing a movement restraining device of a device mounting base according to a third exemplary embodiment of the present invention;
Fig. 6 is an exploded perspective view showing a movement restraining device of a device mounting base according to a fourth exemplary embodiment of the present invention;
Fig. 7 is an exploded perspective view showing a movement restraining device of a device mounting base according to a fifth exemplary embodiment of the present invention;
Fig. 8 is an exploded perspective view showing a movable hanging device of a device mounting base according to a sixth exemplary embodiment of the present invention;
Fig. 9A is a sectional view showing the same movable hanging device of the device mounting base;
Fig. 9B is a plan view showing the same movable hanging device of the device mounting base;
Fig. 10A is a sectional view of the movable hanging device before an apparatus is mounted on the device mounting base;
Fig. 10B is a sectional view of the movable hanging device after the apparatus is mounted on the device mounting base;
Fig. 11 is an exploded perspective view showing a movable hanging device of a device mounting base according to a seventh exemplary embodiment of the present invention;
Fig. 12A is a sectional view showing the same movable hanging device of the device mounting base;
Fig. 12B is another sectional view showing the same movable hanging device of the device mounting base;
Fig. 13 is a schematic view showing a magnetic movable device of a device mounting base according to an eighth exemplary embodiment of the present invention;
Fig. 14 is a sectional view showing one example of conventional structure used for installation of a front panel; and
Fig. 15 is a sectional view showing another example of conventional structure used for installation of a front panel.

### REFERENCE MARKS IN THE DRAWINGS

- 1: Device mounting base
- 2: Base
- 3: Support leg
- 3a, 24a and 24b: Wall
- 4: Support rod
- 5: Connecting member
- 6: Main mounting unit
- 7: Apparatus
- 7a: Video recording apparatus
- 8: Shelf
- 9: Front panel
- 10: Hole
- 11 and 16: Retaining member
- 11a and 16b: Fixing portion
- 11b and 16c: Locking portion
- 12: Movable device
- 13 and 18: Restraining key
- 14, 17 and 19: Restraining key catcher
- 14a and 14b: Restraining wall
- 15, 20 and 22: Movement restraining device
- 16a: Cylindrical retainer
- 17a: Retaining slot
- 21: Restraining key retaining plate
- 21a: Restraining key retaining hole
- 23 and 27: Locking member
- 23a and 27a: Key portion
- 23b and 27b: Hook portion
- 24 and 28: Retaining groove
- 25 and 29: Movable hanging device
- 26 and 30: Elastic material
- 27c: Reinforcing portion
- 28a: Sloped slit
- 28b: Elastic member retaining surface
- 31: Sheet metal
- 32: Sheet magnet
- 33: Magnetic movable device

### DETAILED DESCRIPTION OF PREFERRED EMBODIMENTS

### FIRST EXEMPLARY EMBODIMENT

Description is provided hereinafter of a device mounting base according to the first exemplary embodiment of the present invention with reference to the accompanying drawings. It should be understood that the scope of the present invention is not restricted by the first exemplary embodiment described herein.

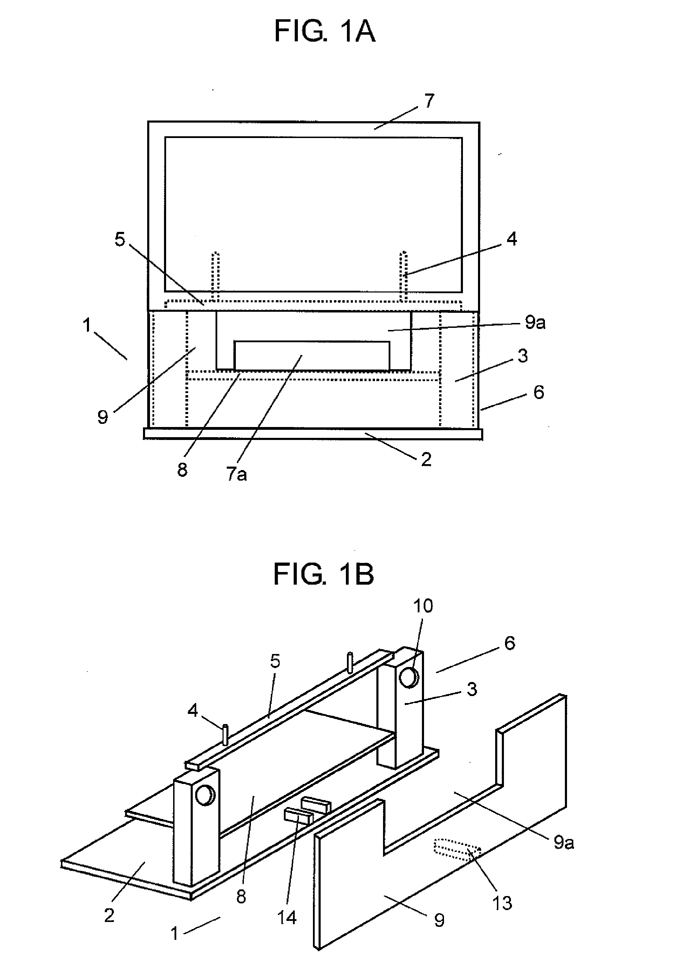

Fig. 1A is a front view showing the device mounting base according to the first exemplary embodiment of this invention with a thin-screen television mounted thereon as a typical apparatus. Fig. 1B is an exploded perspective view of a part of the same device mounting base.

As shown in Fig. 1A and 1B, device mounting base 1 has main mounting unit 6 comprising board-like base 2, two support legs 3 set up on base 2 and connecting member 5 connecting upper parts of two support legs 3 and having support rods 4. Main mounting unit 6 alone has a capacity of carrying apparatus 7 represented by a thin-screen television such that it can support apparatus 7 by having a bottom part thereof engaged to support rods 4.

Main mounting unit 6 also has shelf 8 located between and held by two support legs 3 for carrying video recording apparatus 7a, beside the function of carrying apparatus 7 on its upper surface.

In most cases, base 2, support legs 3 and connecting member 5 are made of a plywood, resin and aluminum respectively in consideration of their strengths, lightweights and costs. In certain cases, however, support legs 3 may also be made of a metal such as aluminum when apparatus 7 of a heavy weight is anticipated.

Main mounting unit 6 is provided in front thereof with front panel 9 formed of an acrylic plate in a shape of generally concave polygon, in which an upper center portion of the panel is cut out rectangularly. Front panel 9 is colored black to make support legs 3 not visible from the front side and to improve glossiness and massiveness of the surface of front panel 9 by virtue of the black color.

The color needs not be limited to black, but it can be any color such as brown so long as it makes support legs 3 not visible and puts glossiness on the surface. When apparatus 7 is a thin-screen television, it is considered most suitable for front panel 9 to be colored black in view of the aesthetic coordination in color with apparatus 7 since such apparatus 7 is tinted either black or silver in most of the cases. It is also possible to select a color for the coloring according to a place and region or preference of people where and whom the use of mounting stand 1 is aimed.

Cutout portion 9a of front panel 9 is formed to match with a height of shelf 8, thereby allowing operation of recording apparatus 7a on shelf 8 as well as insertion and removal of various recording media (not shown) through cutout portion 9a. A space under shelf 8 behind front panel 9 may also be used for placement of other apparatuses if they do not require manual operation such as insertion and removal of various recording media.

The apparatuses placed under shelf 8 can be operated with an infrared remote controller (not shown) without a trouble since front panel 9 is made of the acrylic plate and colored with a substance capable of transferring the infrared rays. The space under shelf 8 can thus be used effectively even it is behind front panel 9.

Front panel 9 can be formed into a width sufficient to cover support legs 3 since one of its purposes is to improve the appearance by making support legs 3 invisible. It is desirable, however, to form front panel 9 of a width equal to that of apparatus 7 in consideration of harmony in the design with apparatus 7.

Naturally, an overall width of front panel 9 becomes equal to the width of apparatus 7 when support legs 3 are designed to support both right and left sides of apparatus 7 and front panel 9 is formed to have the width to cover support legs 3.

Description is provided next of the reasons why acrylic plate is used for front panel 9.

Acrylic plate has an outstanding weather resistance and a high shock resistance, so that the high shock-resistant property can decrease the risk of having front panel 9 damaged even when front panel 9 installed on the front side of main mounting unit 6 is so large in size as that of upsized apparatus 7. This property, along with the outstanding weather resistance, can provide for a long expected serviceable life of the device mounting base.

The high shock-resistant property of the acrylic plate helps ease handling in the process of forming front panel 9 and installing it to main mounting unit 6, thereby improving the workability.

Another property of the acrylic plate is a good thermo-melting moldability, which also helps form front panel 9 of any shape and size with a high dimensional accuracy. In addition, the acrylic plate can be tinted uniformly with any color that improves a massive appearance because of its easily colorable property. It is hence desirable for the above reasons to form front panel 9 with an acrylic plate. However, these reasons do not preclude the use of any plastic plate of other kind than the acrylic plate.

Front panel 9 is installed on main mounting unit 6 in a manner, which is described hereinafter.

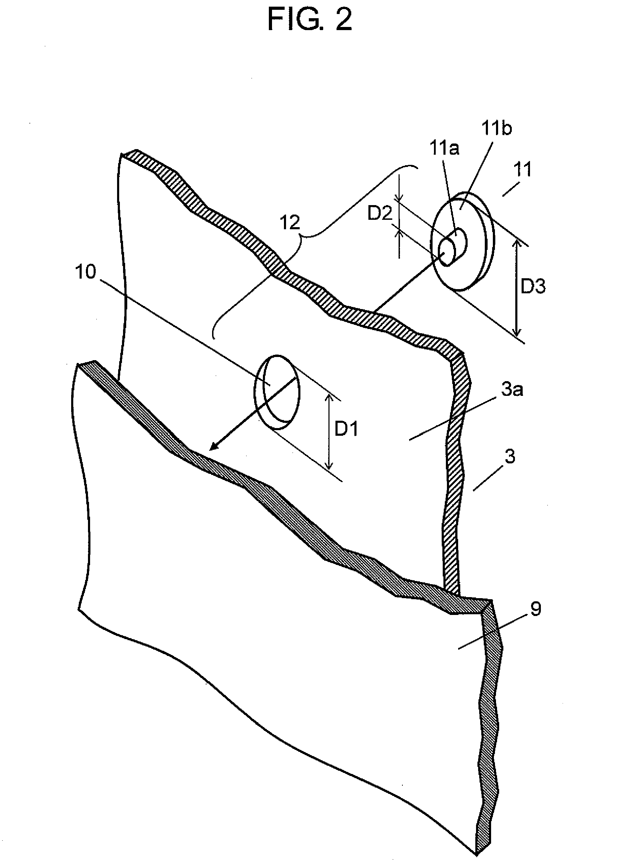

Fig. 2 is an exploded perspective view showing a movable device of the device mounting base according to the first exemplary embodiment of this invention. As shown in Fig. 1B and Fig. 2, support legs 3 are provided with a plurality of holes 10 having diameter D1 formed in walls 3a at the front side thereof (i.e., the side facing front panel 9) so that front panel 9 located in front of support legs 3 also faces holes 10 at the plurality of positions.

Retaining member 11 having a shape of thumbtack is inserted in each of holes 10 from the back of walls 3a, and the tips of retaining members 11 are bonded to the back surface of front panel 9 with an adhesive, a double-sided adhesive tape or the like material. Retaining member 11 comprises fixing portion 11a having diameter D2 smaller than diameter D1 of holes 10 by about 5mm and a length longer than a thickness of walls 3a of support legs 3 by about 1mm, and a disc-shaped locking portion 11b formed unitary with fixing portion 11a and having diameter D3 larger than diameter D1 of holes 10 by about 5mm.

A combination of retaining member 11 bonded to the back surface of front panel 9 and hole 10 formed in wall 3a of support leg 3 constitute movable device 12. The work of bonding retaining members 11 to front panel 9 through holes 10 is carried out from access openings (not shown) formed in the backsides of support legs 3.

At least one movable device 12 needs to be provided at each side of right and left support legs 3 to prevent front panel 9 from coming loose from support legs 3. This makes it necessary to provide a plurality of the movable devices in all. It is also necessary that movable devices 12 are located above the center of gravity of front panel 9 to prevent front panel 9 from tilting forward.

The number of movable devices 12 may be reduced when retaining members 11 are made robust enough, and retaining members 11 and front panel 9 are bonded with sufficient strength. The bonding strength between retaining members 11 and front panel 9 can be increased when an area of bonding surfaces is increased. However, it is desirable to make as small as possible the area of bonding surfaces between retaining members 11 and front panel 9 since large bonding surfaces can result in a high probability of causing distortion in the bonding surfaces when front panel 9 deforms.

It is therefore desirable to provide the plurality of retaining members 11 at respective positions of both right and left support legs 3 since the small bonding surfaces tend to lower the bonding strength between retaining members 11 and front panel 9.

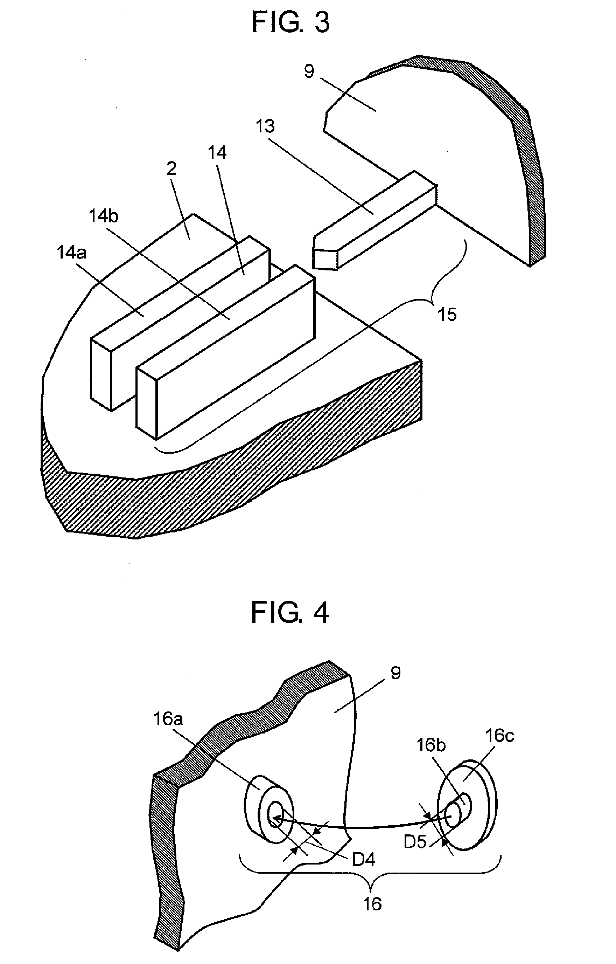

Fig. 3 is an exploded perspective view showing a movement restraining device of the device mounting base according to the first exemplary embodiment of this invention. Front panel 9 is provided with restraining key 13 disposed on the bottom side in generally the lateral center thereof along an orientation parallel to base 2, as shown in Fig. 1B and Fig. 3. Restraining key 13 is inserted in and held by restraining key catcher 14 provided on base 2.

Restraining key catcher 14, or a key catcher, comprises restraining walls 14a and 14b formed side by side for preventing restraining key 13 from shifting sideways. Restraining key 13 and restraining key catcher 14 constitute movement restraining device 15. A height of restraining walls 14a and 14b is determined by taking into consideration a case, in which front panel 9 shrinks and causes restraining key 13 to shift upward.

The provision of movement restraining device 15 restricts a position of front panel 9 to the lateral center and prevents it from shifting sideways even if front panel 9 deforms due to heating and cooling, or moisture absorption and dehydration.

As discussed above, this exemplary embodiment helps ease the placement of front panel 9 to main mounting unit 6 and positively prevents front panel 9 from shifting with the simple structure even though it is provided with movement restraining device 15.

Moreover, movement restraining device 15 provided at generally the lateral center of front panel 9 can equalize the deformation of front panel 9 on both the right and left sides about the center so as to fully demonstrate its effect of making positional shifting of front panel 9 unobtrusive with respect to apparatus 7.

Movable devices 12 can prevent front panel 9 from warping and distorting since retaining members 11 are moveable within holes 10 of support legs 3 to absorb lateral deformation of front panel 9.

In addition, movable device 12 and movement restraining device 15 also prevent front panel 9 from warping and distorting, since restraining key 13 is vertically movable between restraining walls 14a and 14b of restraining key catcher 14 and retaining members 11 are moveable within holes 10 of support legs 3 to absorb vertical deformation of front panel 9.

Naturally, the functions of movement restraining device 15 and movable device 12 can restrict positional shifting of front panel 9 and prevent front panel 9 from warping and distorting due to deformation of any form in combination of both lateral and vertical directions.

An amount of dimensional change caused by temperature is determined according to a coefficient of linear expansion of the material. Assume that an acrylic plate has a coefficient of linear expansion of 6.5 × 10⁻⁵ mm/mm-°C in a range of 0°C to 40°C, a 1,000mm-long acrylic plate exhibits a dimensional change of 0.65mm with a change of 10°C in the temperature, as given by an expression of 1,000mm × 10°C × 6.5 × 10⁻⁵. The dimensional expansion and contraction becomes 1.3mm when the temperature changes by 20°C, and this figure becomes 1.82mm with the same temperature change if the acrylic plate is 1,400mm long.

When an acryl resin plate or PMMA ("polymethyl methacrylate"), for example, is left in the normal atmosphere, it gradually absorbs moisture until it eventually becomes equilibrated in moisture content with the humidity of the atmospheric air. The PMMA plate expands dimensionally when it absorbs moisture.

The dimensions increase 0.02% on the average with an increase of every 0.1% of water absorption at a moisture content level below 1.5%. Assume if there is a difference of 50% in the humidity between winter and summer seasons (30% in winter and 80% in summer), a difference in the equilibrium moisture contents comes to about 0.9% between the two seasons. An amount of dimensional change attributed to the moisture absorption thus becomes 1.8mm as given by an expression of 1,000mm × 0.9 × 0.02/0.1 × 10⁻² when the acrylic plate is 1,000mm in length. This figure becomes 2.52mm if the acrylic plate is 1,400mm long.

In the case of an acrylic plate having an overall width of 1,400mm, an expansion and contraction of about 4.34mm is thought to occur as calculated by 1.82mm + 2.52mm when there is a difference in the temperature of 20°C and a difference in the humidity of 50%. However, a consideration is necessary for only one half of that amount of expansion and contraction, or about 2.17mm (i.e., 4.34mm divided by 2) since movement restraining device 15 is provided at the lateral center of front panel 9 made of the acrylic plate. It is the normal practice for ordinary product to determine a movable range of movable device 12 by taking into accounts about 3mm of expansion and contraction for each side along the lateral direction in order to cope with larger differences in the temperature and humidity than 20°C and 50% respectively.

The movable range of movable device 12 determined in the above manner also applies to the following exemplary embodiments.

The effect of deformation due to heating, cooling, moisture absorption and dehydration is not limited only to front panel 9 without excepting main mounting unit 6. It is therefore necessary to consider this point on the product when determining the movable range of movable device 12 though a degree of deformation varies greatly depending on materials used for main mounting unit 6. This point is also applicable to the following exemplary embodiments.

### SECOND EXEMPLARY EMBODIMENT

Fig. 4 is a perspective view showing a retaining member constituting a part of a device mounting base according to the second exemplary embodiment of the present invention. It should be understood that the scope of the present invention is not restricted by the second exemplary embodiment described herein.

In order to improve a bonding strength with front panel 9, retaining member 11 illustrated in Fig. 2 may be replaced with retaining member 16, which comprises cylindrical retainer 16a made of a resin material bonded to the backside of front panel 9 (i.e., the side facing main mounting unit 6), fixing portion 16b inserted and bonded to cylindrical retainer 16a, and a disc-shaped locking portion 16c formed unitary with fixing portion 16b, as shown in Fig. 4. In this case, inner diameter D4 of cylindrical retainer 16a and diameter D5 of fixing portion 16b are made to have a dimensional relation similar to that between hole 10 and fixing portion 11a described in the first exemplary embodiment. In other words, the inner diameter D4 of the cylindrical portion is made larger than diameter D5 of fixing portion 16b by about 5mm.

### THIRD EXEMPLARY EMBODIMENT

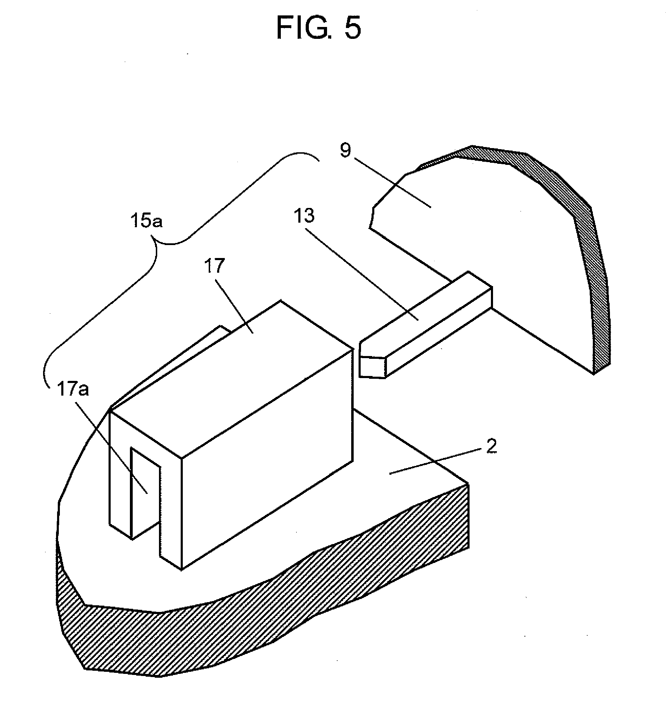

Fig. 5 is a perspective view showing a movement restraining device constituting a part of a device mounting base according to the third exemplary embodiment of the present invention. It should be understood that the scope of the present invention is not restricted by the third exemplary embodiment described herein.

As shown in Fig. 5, it is possible to form restraining key catcher 17 of a prismatic tube-like shape on base 2 in place of restraining key catcher 14 illustrated in Fig. 3. Restraining key catcher 17 made into this shape can limit a vertical movement of restraining key 13 formed on front panel 9 while preventing dust from collecting inside restraining key catcher 17. The above structure thus constitutes movement restraining device 15a.

It is desirable that the prismatic tube-like shape of restraining key catcher 17 is provided with retaining slot 17a of a height larger than that of restraining key 13 by 4mm and a width larger than that of restraining key 13 by about 0.2mm at both sides so that restraining key 13 is vertically slidable in retaining slot 17a without impediment.

### FOURTH EXEMPLARY EMBODIMENT

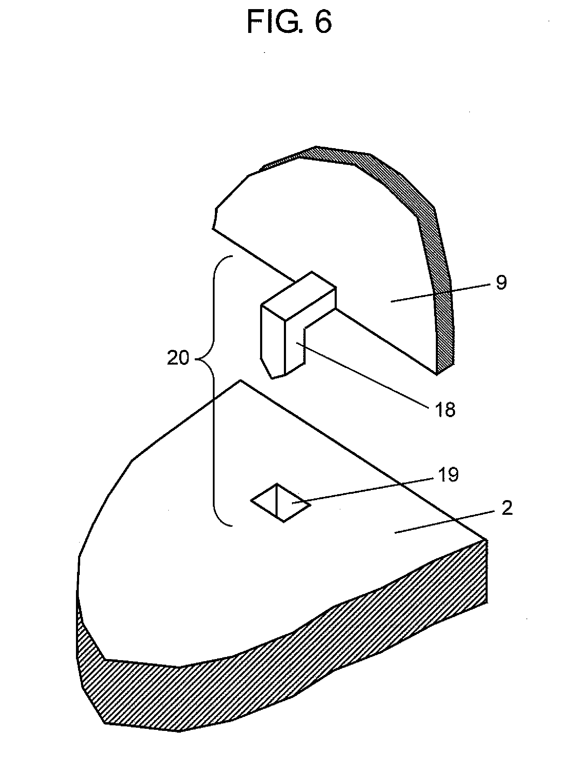

Fig. 6 is a perspective view showing a movement restraining device constituting a part of a device mounting base according to the fourth exemplary embodiment of the present invention. It should be understood that the scope of the present invention is not restricted by the fourth exemplary embodiment described herein.

As shown in Fig. 6, it is possible to use movement restraining device 20 comprising restraining key 18 of a hook shape having a downwardly bent tip formed on the lower center part of front panel 9, and restraining key catcher 19 of a hole formed in base 2 for receiving restraining key 18 inserted therein, instead of movement restraining device 15 shown in Fig. 3.

It is desirable that restraining key catcher 19 has a depth larger than a vertical length of restraining key 18 by 4mm and a width larger than that of restraining key 18 by about 0.2mm at both sides so that restraining key 18 is freely moveable in the vertical direction.

### FIFTH EXEMPLARY EMBODIMENT

In all of the above exemplary embodiments, movement restraining devices 15, 15a and 20 shown in Figs. 3, 5 and 6 are composed substantially differently from the structure of movable device 12 shown in Fig. 2. However, any of the movement restraining devices may have a structure comprising restraining key retaining plate 21 having restraining key retaining hole 21a disposed in parallel to front panel 9 at generally the lateral center of base 2, and retaining member 11 used for movable device 12 shown in Fig. 2 fixed to the backside of front panel 9 through restraining key retaining hole 21a.

Diameter D4 of restraining key retaining hole 21a is set to a size larger than diameter D2 of fixing portion 11a of retaining member 11 by about 1mm, but smaller than diameter D1 of hole 10 formed in wall 3a of support leg 3 shown in Fig. 2.

Restraining key retaining hole 21a and retaining member 11 thus constitute movement restraining device 22.

Movement restraining device 22 can be composed in this manner by setting a moveable range smaller than that of movable device 12 shown in Fig. 2.

Movement restraining device 22 of the above structure has an advantage in view of manufacturing feasibility since it can be composed of a common component with movable device 12 while it can also simplify the structure since it has the function of holding front panel 9 to main mounting unit 6, which eliminates the need of providing movable device 12 near movement restraining device 22.

Retaining member 11 used here may have a structure excluding locking portion 11b.

### SIXTH EXEMPLARY EMBODIMENT

Description is provided next of a device mounting base according to the sixth exemplary embodiment of the present invention with reference to the accompanying drawings. It should be understood that the scope of the present invention is not restricted by the sixth exemplary embodiment described herein.

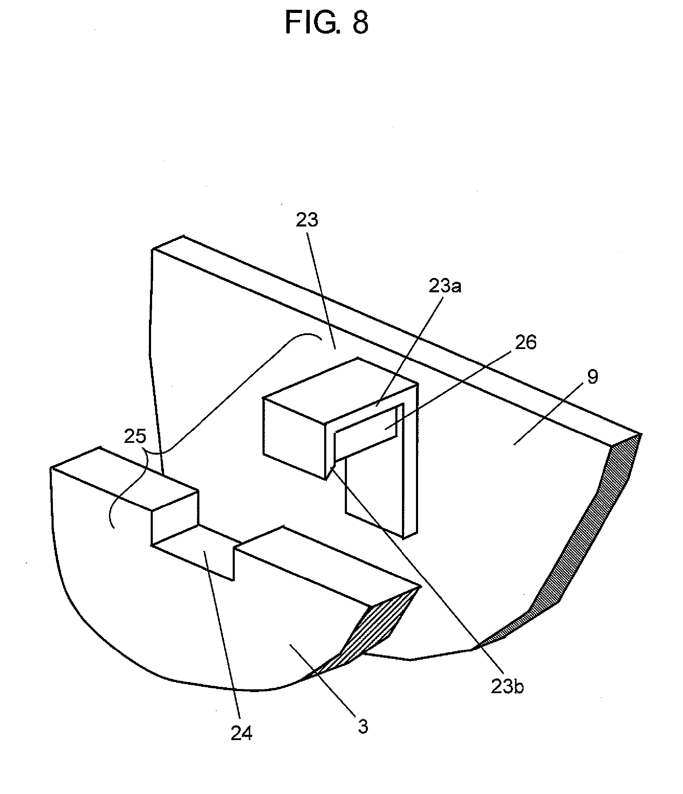

Fig. 8 is a perspective view showing a movable device constituting the device mounting base of the sixth exemplary embodiment of this invention.

As shown in Fig. 8, the movable device of the sixth exemplary embodiment comprises locking member 23 having key portion 23a and downwardly extending hook portion 23b and fixed to the backside (i.e., the side facing main mounting unit 6) of front panel 9 near an upper edge thereof, and retaining groove 24 formed in an upper edge of the front side (i.e., the side facing front panel 9) of support leg 3.

Since this movable device has the function of hanging front panel 9 on support leg 3, it is defined as movable hanging device 25 consisting of locking member 23 and retaining groove 24.

Locking member 23 has elastic material 26 made of a form rubber, a leaf spring or a plastic spring fixed to the underside of key portion 23a, so that locking member 23 engages in retaining groove 24 with elastic material 26 between them.

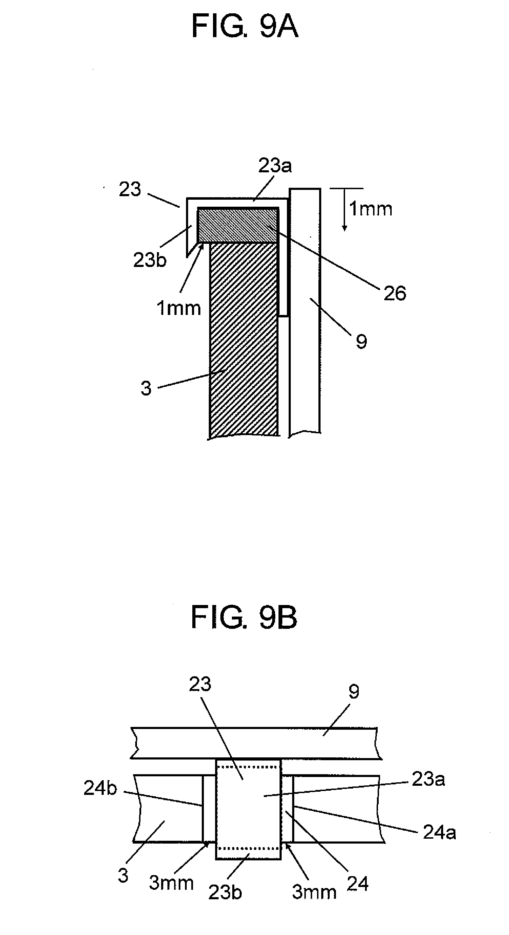

Fig. 9A and Fig. 9B show front panel 9 in a position of being hung on support leg 3 by locking member 23 engaged in retaining groove 24. This structure makes use of movable hanging device 25 to hang front panel 9 on main mounting unit 6 to keep front panel 9 from not separating from main mounting unit 6.

In addition, front panel 9 hung by movable hanging device 25 can positively prevent front panel 9 from tilting.

Although locking member 23 engages in retaining groove 24 via elastic material 26 as shown in Fig. 9, locking member 23 is constructed to have such a size that is freely slidable forward and backward by about 1mm inside elastic material 26 by taking into account of a dimensional variation of locking member 23 relative to retaining groove 24 and a positional shift of locking member 23 attributable to deformation of front panel 9. Here, hook portion 23b restricts the forward movement of locking member 23 to prevent front panel 9 from slipping out support leg 3. Because of the structure capable of keeping front panel 9 form not coming off main mounting unit 6 even before apparatus 7 is mounted, it reduces to a minimum the risk of causing front panel 9 to fall off main mounting unit 6 and having it damaged in the process of mounting apparatus 7. Hook portion 23b thus serves to keep a space between main mounting unit 6 and front panel 9 within a predetermined distance.

In the case of front panel 9 made of an acrylic plate having an overall width of 1,400mm, there also occurs a change in dimension up to 4.34mm (0.31% of the overall width) as discussed previously. According to the sixth exemplary embodiment, the structure shown in Fig. 9B is provided with a space of 3mm at both sides of locking member 23 to respective walls 24a and 24b of retaining groove 24 in order to absorb deformation of front panel 9 offset to either side of it.

Elastic material 26 has the function of lessening a gravitational force and a force of impact exerted upon locking member 23 when front panel 9 is hung on support leg 3, or when locking member 23 is engaged to retaining groove 24, and preventing locking member 23 from coming off front panel 9 or otherwise being damaged.

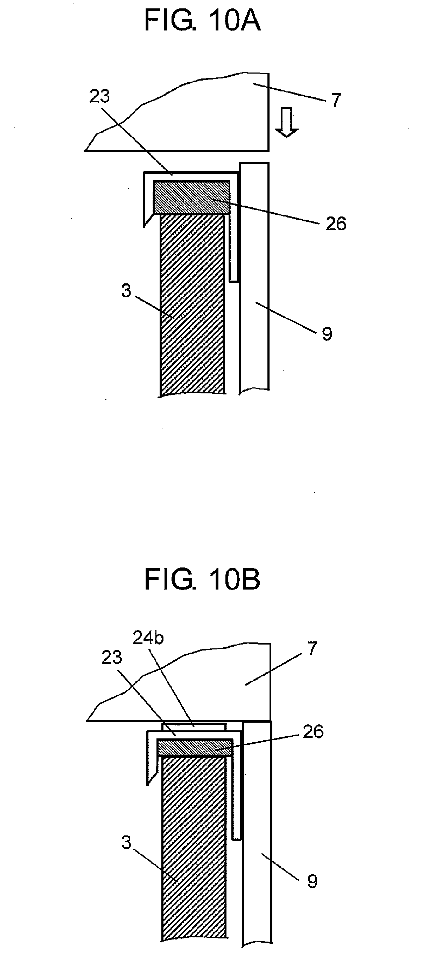

Fig. 10A and Fig. 10B are sectional views of the device mounting base according to the sixth exemplary embodiment of this invention, showing a step of mounting an apparatus on it. Elastic material 26 imparts an upward thrust on front panel 9 in a manner to make an upper side of front panel 9 abut upon a bottom surface of apparatus 7 mounted on main mounting unit 6, as shown in Fig. 10A and Fig. 10B. Elastic material 26 can deform and shift front panel 9 downward by about 1mm due to the weight of apparatus 7 mounted on main mounting unit 6.

This structure can make the bottom surface of apparatus 7 into contact with the upper side of front panel 9 without a gap, and improve appearance of integrity between apparatus 7 and front panel 9, thereby providing the device mounting base with an attractive outward look. The structure can also ensure proper alignment of the upper side of front panel 9 and eliminate the tilting of front panel 9 due to its deformation nearly completely.

What has been described above is an example, in which elastic material 26 is fixed to the underside of key portion 23a of locking member 23. However, elastic material 26 may be fixed to retaining groove 24 formed in the upper edge of the front side of support leg 3 such that elastic material 26 is interposed between the underside of locking member 23 and the upper surface of retaining groove 24 where they engage each other.

Moreover, although the structure described above has retaining groove 24 formed in support leg 3, it may be so altered that retaining groove 24 is formed in another member made of a wood or the like material and such another member is fixed to support leg 3 in order to avoid retaining groove 24 from being shifted due to thermal deformation.

In addition, movable hanging device 25 and front panel 9 may be formed unitary into a single component though they have been described as separate components in the above embodiment.

### SEVENTH EXEMPLARY EMBODIMENT

Description is provided next of a device mounting base according to the seventh exemplary embodiment of the present invention with reference to the accompanying drawings. It should be understood that the scope of the present invention is not restricted by the seventh exemplary embodiment described herein.

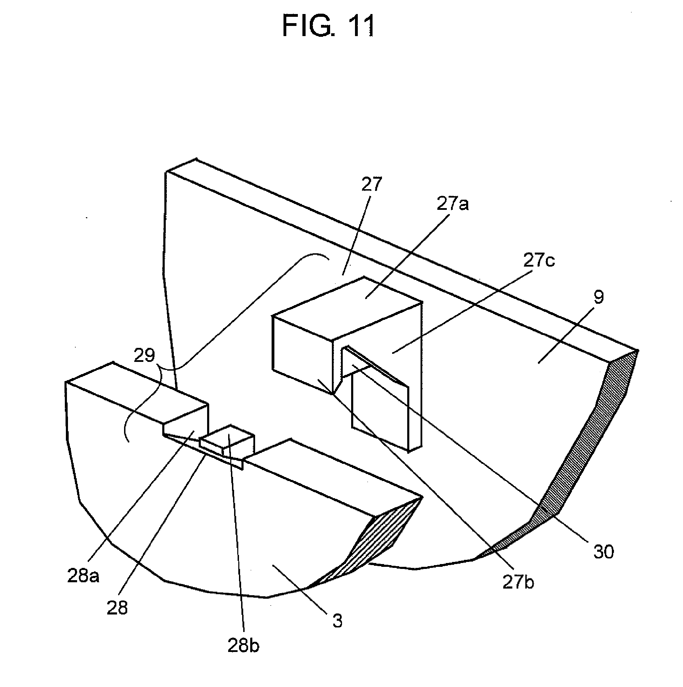

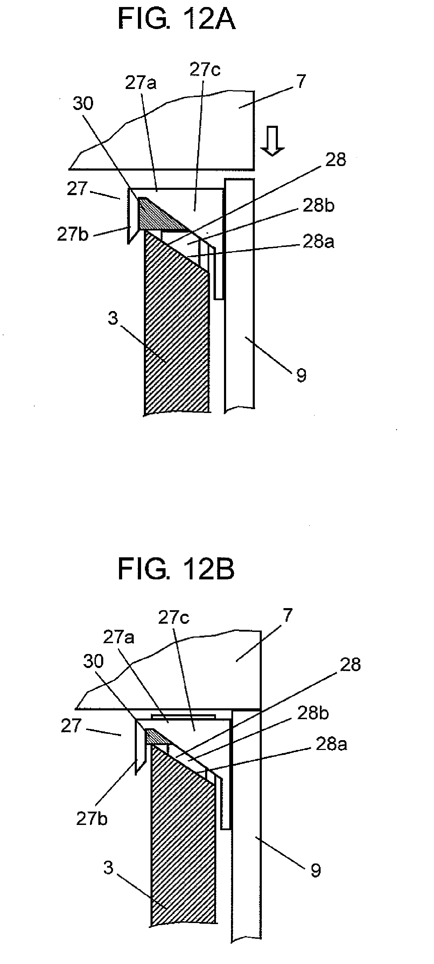

Fig. 11 is a perspective view showing a movable device constituting the device mounting base of the seventh exemplary embodiment of this invention. Fig. 12A and Fig. 12B are sectional views of the movable device, showing a movement of it when apparatus 7 is being mounted.

The movable device shown in Figs 11, 12A and 12B is designated as movable hanging device 29 consisting of locking member 27 and retaining groove 28 formed in support leg 3 in a manner to fit with locking member 27, wherein locking member 27 has a physical strength improved from that of locking member 23 used for movable hanging device 25 shown in Fig. 8 to Figs. 10A and 10B.

As shown in Figs 11, 12A and 12B, locking member 27 comprises key portion 27a and downwardly extending hook portion 27b, as well as reinforcing portions 27c of a triangular shape formed at both sides of the corner connecting two angled parts of hook portion 27b to increase the strength of key portion 27a.

Retaining groove 28 has sloped slits 28a formed at both right and left sides thereof with sloped surfaces tilted toward the front side and of such a configuration that reinforcing portions 27c of locking member 27 fit in these sloped slits 28a when locking member 27 engages in retaining groove 28.

Though Figs 11, 12A and 12B show reinforcing portions 27c formed at both sides of key portion 27a, there can be just one to provide for the effectiveness.

There is elastic material retaining surface 28b formed horizontally at a center area of retaining groove 28 for seating elastic material 30 fixed to the underside surface of locking member 27 when locking member 27 engages in retaining groove 28. Elastic material retaining surface 28b protrudes above sloped slits 28a as shown in Fig. 11, and the spaces provided between elastic member retaining surface 28b and both right and left side walls of retaining groove 28 have a margin of 6mm beside the thicknesses of reinforcing portions 27c of locking member 27 in order for reinforcing portions 27c to shift freely in the lateral direction.

In this structure, elastic material 30 imparts an upward thrust on front panel 9 in a manner to make an upper side of front panel 9 abut upon a bottom surface of an apparatus (not shown) mounted on the main mounting unit. Accordingly, the structure can make the bottom surface of the apparatus in contact with the upper side of front panel 9 without a gap when the apparatus is mounted on the main mounting unit, and improve appearance of integrity between apparatus 7 and front panel 9, thereby providing the device mounting base with an attractive outward look.

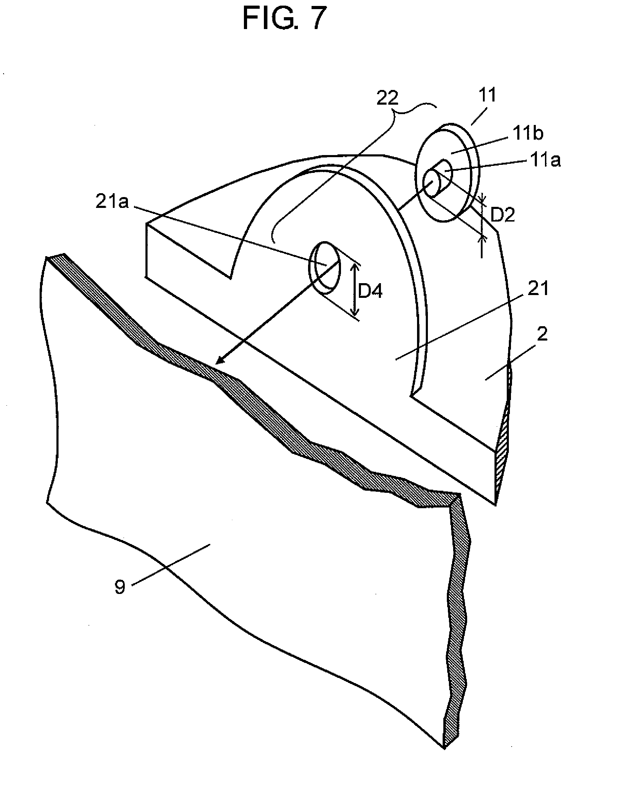

It should be noted that a movement restraining device is also necessary for restricting front panel 9 from shifting in the device mounting bases of the sixth and the seventh exemplary embodiments of this invention, and any of movement restraining devices 15, 15a, 20 and 22 shown in Figs. 3, 5, 6 and 7 may be used for this purpose.

In any of the device mounting bases of the sixth and the seventh exemplary embodiments of this invention, base 2 may additionally be provided with a groove having a width larger that the thickness of front panel 9 by about 1mm and a depth of about 3mm in a location confronting the bottom side of front panel 9. The groove is so formed in base 2 that the bottom side of front panel 9 fits therein when front panel 9 slides downward by the weight of apparatus 7. This structure can improve appearance of integrity between base 2 and front panel 9 in addition to the integrity between apparatus 7 and front panel 9, thereby providing the device mounting base with an even more attractive outward look.

In addition, movable hanging device 29 and front panel 9 may be formed unitary into a single component though they have been described as separate components in the above embodiment.

### EIGHTH EXEMPLARY EMBODIMENT

Description is provided next of a device mounting base according to the eighth exemplary embodiment of the present invention with reference to the accompanying drawings. It should be understood that the scope of the present invention is not restricted by the eighth exemplary embodiment described herein.

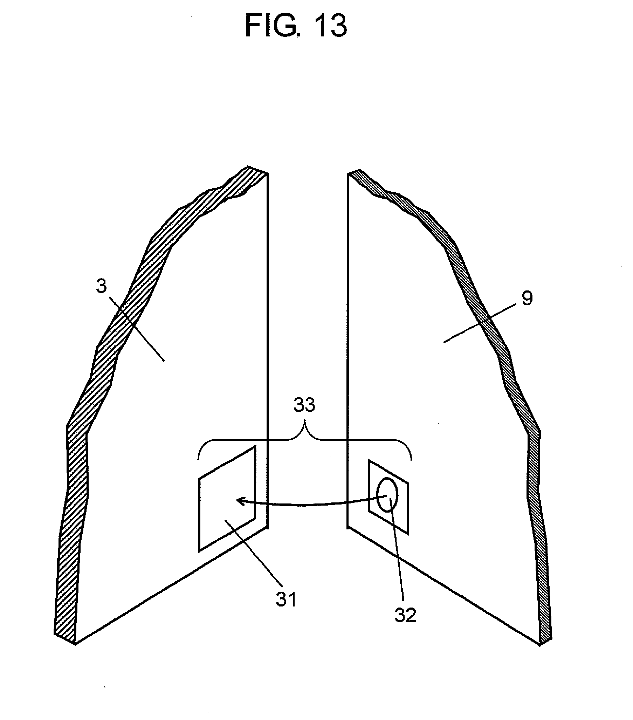

Fig. 13 is a perspective view showing a movable device constituting the device mounting base of the eighth exemplary embodiment of this invention.

According to the eighth exemplary embodiment, the device mounting base is provided with magnetic movable device 33 comprising sheet magnet 32 disposed on a front surface of support leg 3 and sheet metal 31 disposed on a back surface of front panel 9 at a position confronting sheet metal 31 as shown in Fig. 13.

Magnetic movable device 33 can avoid front panel 9 from coming off main mounting unit 6 including support leg 3 by the magnetic force, while it is also capable of absorbing deformation of front panel 9 in any of the lateral and vertical directions by way of sliding on sheet metal 31, thereby preventing front panel 9 from warping and distorting.

In Fig. 13, although sheet metal 31 is shown as disposed on the front surface of support leg 3 and sheet magnet 32 disposed on the back surface of front panel 9, their positions may be reversed so that sheet magnet 32 and sheet metal 31 are disposed on the front surface of support leg 3 and the back surface of front panel 9 respectively.

A movement restraining device is also necessary for restraining front panel 9 from shifting in the device mounting bases of the eighth exemplary embodiment of this invention, and any of movement restraining devices 15, 15a, 20 and 22 shown in Figs. 3, 5, 6 and 7 may be used for this purpose.

While magnetic movable device 33 has an excellent capability of absorbing the deformation of front panel 9 in both the lateral and the vertical directions because of its ability to slide easily in all directions, it has a possibility of allowing front panel 9 to shift downward by its own weight if the device mounting base is not equipped with any movable device other than magnetic movable device 33, resulting in a conspicuous gap below apparatus 7 (not shown) mounted on main mounting unit 6 when front panel 9 contracts.

It is therefore preferable to employ a combination of two or more kinds of movable devices such as a structure comprising any of movable hanging devices 25 and 29 shown in Fig. 8 to Fig. 11 disposed on the upper side of front panel 9 for preventing it from shifting downward, and magnetic movable device 33 disposed on the lower side of front panel 9 for providing the excellent capability of absorbing the deformation of front panel 9.

A movement restraining device is also necessary for restraining front panel 9 from shifting even in the case of this structure, and any of movement restraining devices 15, 15a, 20 and 22 shown in Figs. 3, 5, 6 and 7 can be used for this purpose. In other words, it should be appropriate to use a combination of two or more kinds of the movable devices and the movable hanging devices described in the previous exemplary embodiments.

Although front panel 9 has been shown as being made of an acrylic plate in the above embodiments, it may even be made of other material such as a glass plate, a wood board and a metal plate such as iron or aluminum to make the best use of their inherent characteristics.

When front panel 9 is formed of a metal such as iron or aluminum for instance, it can ease to make up a structure that provides an appearance of integrity with the apparatus, in addition to the beauty of massiveness by glossiness as well as the robustness.

When front panel 9 is formed of a wood material, it can provide an advantage of lessening the deformation attributable to heating and cooling while the wood grain gives a quality appearance, although wood materials tend to give rise to a problem of warping and distorting due to moisture absorption and dehydration.

When front panel 9 is made of a glass plate, it can provide a quality appearance of glossiness better than that of the acrylic plate as well as the physical strength and less warpage and distortion due to deformation. If front panel 9 is of a large size, on the other hand, it becomes necessary to increase robustness of movable hanging devices 25 and 29 as well as bonding strength of movable hanging devices 25 and 29 with front panel 9 in order to bear the added weight.

### INDUSTRIAL APPLICABILITY

The device mounting base according to the present invention has an advantage of bearing the front panel installed on the main mounting unit without tilting and becoming misaligned with respect to the apparatus placed thereon, and it is therefore useful for mounting an apparatus of any kind including a thin-screen television and a monitor unit.

## Claims

1. A device mounting base comprising:
a main mounting unit for mounting an apparatus; and
a front panel installed on the main mounting unit with a plurality of movable devices in a position in front of the main mounting unit,
wherein the main mounting unit and the front panel are engaged with a movement restraining device for restraining the front panel from shifting in front of the main mounting unit.

2. The device mounting base of claim 1, wherein the movable device comprises a movable hanging device for hanging the front panel on the main mounting unit.

3. The device mounting base of claim 2, wherein the movable hanging device is provided with a hook portion for keeping a space between the main mounting unit and the front panel within a predetermined distance.

4. The device mounting base of claim 2, wherein the movable hanging device is provided with a key portion having a hook portion for keeping a space between the main mounting unit and the front panel within a predetermined distance, and a reinforcing portion reinforcing the key portion.

5. The device mounting base in any of claim 2 to claims 4, wherein the front panel is installed on the main mounting unit with the movable hanging device and an elastic material engaged to the movable hanging device and imparting an upward thrust on the front panel.

6. The device mounting base of claim 5, wherein the elastic material comprises any of a form rubber, a leaf spring and a plastic spring.

7. The device mounting base of claim 5, wherein the front panel shifts downward against the thrust of the elastic material when the apparatus is being mounted on the main mounting unit, and an upper side of the front panel abuts upon a bottom surface of the apparatus by the thrust of the elastic material after the apparatus is mounted on the main mounting unit.

8. The device mounting base of claim 1, wherein the plurality of movable devices include at least one magnetic movable device for installing the front panel on the main mounting unit by means of a magnetic force.

9. The device mounting base of claim 2, wherein the plurality of movable devices include at least one magnetic movable device for installing the front panel on the main mounting unit by means of a magnetic force, and at least one of the other movable devices comprises the movable hanging device, and further wherein the magnetic movable device is positioned below the movable hanging device.

10. The device mounting base in any of claim 1 and claim 3, wherein the movement restraining device is disposed at the center along a lateral direction of the front panel.

11. The device mounting base of claim 10, wherein the movement restraining device comprises a key disposed on one of the main mounting unit and the front panel, and a key catcher disposed on the other of the main mounting unit and the front panel for holding the key.

12. The device mounting base of claim 10, wherein at least one of the plurality of movable devices has a moveable range smaller than the remainder of the movable devices to provide for a function of the movement restraining device.

13. The device mounting base of claim 1, wherein the front panel is made of any of an acrylic plate, a glass plate, a wood board and a metal plate.

14. The device mounting base of claim 1, wherein the movable device comprises a hole formed in the main mounting unit, and a retaining member having a locking portion of a diameter larger than a diameter of the hole and a fixing portion having a diameter smaller than a diameter of the hole, and further wherein the fixing portion of the retaining member is inserted in the hole of the main mounting unit and bonded to the front panel.

## Amended claims

### Amended claims under Art. 19.1 PCT

**1.** (Amended) A device mounting base comprising:
a main mounting unit for mounting an apparatus;
a front panel disposed in front of the main mounting unit;
a movable device installing the front panel on the main mounting unit in a manner to shift freely; and
a movement restraining device for restraining the front panel from shifting in front of the main mounting unit,
wherein the movable device shifts in a mounting position according to a dimensional change of the front panel.

**2.** The device mounting base of claim 1, wherein the movable device comprises a movable hanging device for hanging the front panel on the main mounting unit.

**3.** The device mounting base of claim 2, wherein the movable hanging device is provided with a hook portion for keeping a space between the main mounting unit and the front panel within a predetermined distance.

**4.** The device mounting base of claim 2, wherein the movable hanging device is provided with a key portion having a hook portion for keeping a space between the main mounting unit and the front panel within a predetermined distance, and a reinforcing portion reinforcing the key portion.

**5.** (Amended) The device mounting base of claim 2, wherein the front panel is installed on the main mounting unit with the movable hanging device and an elastic material engaged to the movable hanging device and imparting an upward thrust on the front panel.

**6.** The device mounting base of claim 5, wherein the elastic material comprises any of a form rubber, a leaf spring and a plastic spring.

**7.** The device mounting base of claim 5, wherein the front panel shifts downward against the thrust of the elastic material when the apparatus is being mounted on the main mounting unit, and an upper side of the front panel abuts upon a bottom surface of the apparatus by the thrust of the elastic material after the apparatus is mounted on the main mounting unit.

**8.** The device mounting base of claim 1, wherein the plurality of movable devices include at least one magnetic movable device for installing the front panel on the main mounting unit by means of a magnetic force.

**9.** The device mounting base of claim 2, wherein the plurality of movable devices include at least one magnetic movable device for installing the front panel on the main mounting unit by means of a magnetic force, and at least one of the other movable devices comprises the movable hanging device, and further wherein the magnetic movable device is positioned below the movable hanging device.

**10.** (Amended) The device mounting base of claim 1, wherein the movement restraining device is disposed at the center along a lateral direction of the front panel.

**11.** The device mounting base of claim 10, wherein the movement restraining device comprises a key disposed on one of the main mounting unit and the front panel, and a key catcher disposed on the other of the main mounting unit and the front panel for holding the key.

**12.** (Amended) The device mounting base of claim 10, wherein the movement restraining device has a moveable range smaller than the plurality of movable devices.

**13.** The device mounting base of claim 1, wherein the front panel is made of any of an acrylic plate, a glass plate, a wood board and a metal plate.

**14.** The device mounting base of claim 1, wherein the movable device comprises a hole formed in the main mounting unit, and a retaining member having a locking portion of a diameter larger than a diameter of the hole and a fixing portion having a diameter smaller than a diameter of the hole, and further wherein the fixing portion of the retaining member is inserted in the hole of the main mounting unit and bonded to the front panel.
